# EUROPÄISCHE PATENTSCHRIFT

(11) **EP 3 571 916 B1**
(45) Veröffentlichungstag und Bekanntmachung des Hinweises auf die Patenterteilung: **14.04.2021**
(21) Anmeldenummer: 19176225.1
(22) Anmeldetag: 23.05.2019
(51) Int. Cl.: A01D 34/30, A01D 34/38, A01D 34/14

(54) **ANTRIEBSANORDNUNG ZUM ANTRIEB EINES MÄHWERKSBALKENS EINES SCHNEIDWERKS**
DRIVE ASSEMBLY FOR DRIVING A MOWER BEAM OF A CUTTING SYSTEM
DISPOSITIF D'ENTRAÎNEMENT D'UN FAISCEAU DE BARRE DE COUPE D'UN OUTIL DE COUPE

(30) Priorität: 24.05.2018 DE 102018208169
(43) Veröffentlichungstag der Anmeldung: 27.11.2019
(73) Patentinhaber: Deere & Company, Moline, IL 61265 (US)
(72) Erfinder: Zumbach, Ferdinand, 68163 Mannheim (DE)
(74) Vertreter: Holst, Sönke

(56) Entgegenhaltungen:
- EP-A2- 2 382 852
- DD-A1- 273 570
- US-A- 2 569 507
- US-A1- 2009 145 097

## Beschreibung

Die Erfindung betrifft ein Schneidwerk mit einer Antriebsanordnung zum sich hin- und her bewegenden Antrieb eines Mähwerksbalkens.

### Stand der Technik

Schneidwerke werden bei der Ernte landwirtschaftlich angebauter Pflanzen verwendet, um die Pflanzen abzuschneiden, zusammenzuführen und einer Erntemaschine zuzuführen, in der sie weiterverarbeitet werden, insbesondere gedroschen (Mähdrescher) oder gehäckselt (Feldhäcksler). Derartige Schneidwerke umfassen in der Regel einen vorderen Mähwerksbalken, um die Pflanzen abzuscheiden, eine über dem Mähwerksbalken angeordnete Haspel, um die oberen Teile der Pflanzen nach hinten zu raffen, und einen Querförderer mit einer Förderschnecke oder Förderbändern, der das Erntegut seitlich zusammenführt, um es durch mittige Finger an der Schnecke oder ein nach hinten förderndes Förderband durch eine hintere, in einer Rückwand des Schneidwerks angeordneten Rückwand einem Schrägförderer des Mähdreschers oder zur Erstellung von Ganzpflanzensilage einem Einzugskanal des Feldhäckslers zuzuführen. An den seitlichen Enden des Schneidwerks sind Seitenwände vorgesehen, zwischen denen sich der Mähwerksbalken und die Querförderschnecke erstrecken. Der Boden des Schneidwerks zwischen dem Mähwerksbalken und der Rückwand wird durch ein als Schneidtisch bezeichnetes Bodenblech gebildet.

Zur Anpassung an unterschiedliche Erntegutarten und somit Pflanzengrößen werden Schneidwerke mit längenverstellbaren Schneidtischen verwendet. Insbesondere zur Rapsernte wird der Schneidtisch nach vorn ausgezogen (und durch Seitenmesser ergänzt), während er bei der Ernte von niedrigeren bzw. nicht wie Raps ein dichtes Buschwerk bildenden Pflanzen, wie z.B. Weizen, demgegenüber nach hinten eingezogen wird.

Insbesondere bei Schneidwerken mit längenverstellbaren Schneidtischen, aber auch bei nichtlängenverstellbaren Schneidwerken, erweist sich der Antrieb des Mähwerksbalken als relativ aufwändig, da das Antriebsmoment vom Mähdrescher nach ganz vorn zum Mähwerksbalken zu übertragen ist. Im Stand der Technik erfolgt der Antrieb des Mähwerksbalkens üblicherweise durch einen Treibriemen, der an einem seitlichen Ende des Schneidwerks angeordnet ist und das vom Mähdrescher bereitgestellte Antriebsmoment nach vorn auf ein Getriebe überleitet, das mittels eines Exzentertriebs die Drehbewegung in eine lineare Hin-und Herbewegung des Mähwerksbalkens umsetzt (vgl. DE 10 2004 037 580 A1 für ein starres Schneidwerk oder EP 1 653 122 A1 für ein Schneidwerk mit längenverstellbarem Tisch), oder der Treibriemen wird durch eine teleskopierbare Gelenkwelle ersetzt (EP 2 700 294 A2).

Bei Schneidwerksbreiten mit größeren Arbeitsbreiten ist es sinnvoll, den Mähwerksbalken in zwei Teile aufzuteilen, die gegenphasig angetrieben werden, um die durch den sich hin- und bewegenden Mähwerksbalken bewirkten Schwingungen auszulöschen. Dabei kann der Antrieb der Mähwerksbalkenhälften von jeweils einem Ende des Schneidwerks durch ein zugeordnetes Getriebe, deren Ausgänge gegeneinander um 180° phasenverschoben sind, erfolgen (US 3 577 716 A), oder ausgehend von der Mitte des Schneidwerks durch ein Getriebe mit einer Kurbelwelle, die zwei phasenversetzte Ausgänge antreibt (US 5 497 605 A). Andere, in der Mitte des Schneidwerks angeordnete Antriebe verwenden über Planetengetriebe angetriebene Exzentertriebe zur Umsetzung der Drehbewegung eines Hydromotors oder einer Gelenkwelle in die Seitenbewegung der Mähwerksbalkenhälften (EP 2 382 852 A2). Die von der Gelenkwelle oder dem Hydromotor angetriebene Eingangswelle ist horizontal und sich vom Getriebe nach hinten erstreckend angeordnet, sodass man zunächst die Rotationsbewegung innerhalb des Getriebes mittels eines Kegelradgetriebes in eine Drehung der Planetengetriebe um die Hochachse umwandeln muss, was zur nachteiligen Folge hat, dass das Getriebe relativ große vertikale Abmessungen hat. Innerhalb eines Schneidwerks, d.h. unter dem Schneidtisch, steht jedoch nur begrenzter Bauraum für das Getriebe zur Verfügung, insbesondere in vertikaler Richtung.

Die DE 200 19 332 U1 beschreibt ein Seitenschneidwerk, das zur Rapsernte an einem seitlichen Ende eines Schneidwerks angebracht wird. Es umfasst einen Hydromotor, der an einem Gehäuse angeflanscht wird, das ein Lager für die Welle des Hydromotors beinhaltet. An der dem Hydromotor abgewandten Seite des Gehäuses ist ein Exzentertrieb angebracht, der zum Antrieb der Messer des Seitenschneidwerks dient. Hier liegt ebenfalls eine relativ große Baulänge in Vorwärtsrichtung vor, da der Hydromotor mit einem eigenen Gehäuse, das Gehäuse mit dem Lager und der Exzentertrieb axial hintereinander angeordnet und voneinander getrennt aufgebaut sind.

In Schneidwerken finden als Hydromotore zum Antrieb des Messerbalkens üblicherweise Radialkolbenmotore Verwendung, die sich durch relativ große axiale Abmessungen auszeichnen. Es wurde bisher nur in einem Schwadmäher eine Verwendung eines hydraulischen Zahnradmotors zum Antrieb eines Messerbalkens beschrieben (DD 273 570 A1), ohne Details zur Kopplung zwischen dem Motor und dem Messerbalken zu nennen.

### Problem

Insbesondere (aber nicht nur) bei Schneidwerken mit längenverstellbaren Schneidtischen steht in der Mitte des Schneidwerks nur ein relativ begrenzter, vertikaler Raum zur Verfügung, in dem ein Getriebe zur Umsetzung der einlaufenden Drehbewegung in eine seitliche Bewegung der Mähwerksbalkenhälften eingebaut werden kann. Die Kurbelwelle der US 5 497 605 A benötigt jedoch einen relativ großen vertikalen Bauraum, was auch für das Kegelradgetriebe der EP 2 382 852 A2 gilt.

Die der Erfindung zu Grunde liegende Aufgabe wird darin gesehen, eine Antriebsanordnung zum Antrieb eines Mähwerksbalkens bereitzustellen, die sich in der quer zur Ebene des Mähwerksbalkens erstreckenden Richtung durch geringe Abmessungen auszeichnet.

### Lösung

Diese Aufgabe wird erfindungsgemäß durch die Lehre der Patentansprüche 1 und 9 gelöst, wobei in den weiteren Patentansprüchen Merkmale aufgeführt sind, die die Lösung in vorteilhafter Weise weiterentwickeln.

Eine Antriebsanordnung zum sich hin- und her bewegenden Antrieb eines Mähwerksbalkens umfasst einen hydraulischen Zahnradmotor mit einem Gehäuse und zwei im Gehäuse angeordneten Zahnräder, die durch ein hydraulisches Medium um eine erste Achse in Drehung versetzbar sind, und einen mit dem Zahnradmotor in Antriebsverbindung stehenden Exzentertrieb, der ein durch eines der Zahnräder um eine zur ersten Achse parallele und insbesondere koaxiale, zweite Achse rotativ antreibbares, exzentrisches Element und ein damit gekoppeltes Abtriebselement umfasst, das mit dem Mähwerksbalken trieblich koppelbar oder gekoppelt ist.

Mit anderen Worten wird ein relativ flach bauender, hydraulischer Zahnradmotor verwendet, um einen Exzentertrieb in Drehung zu versetzen, der seinerseits mit dem Mähwerksbalken in einer Antriebsverbindung steht. Da die Drehachsen des Zahnradradmotors und des Exzentertriebs parallel oder sogar koaxial zueinander stehen, ist kein Winkelgetriebe vorgesehen, um das Antriebsmoment des Zahnradmotors auf den Exzentertrieb zu übertragen. Man erhält demnach einen kompakten, in axialer Richtung sehr flachen Aufbau der Antriebsanordnung, der sich gut in ein Schneidwerk integrieren lässt.

Das exzentrische Element kann direkt oder durch ein Planetengetriebe mit dem Zahnrad gekoppelt sein. Im ersten Fall ist die Antriebsanordnung recht einfach gestaltet und es besteht die Möglichkeit, die Abtriebsdrehzahl der Antriebsanordnung durch eine hinreichend große Dimensionierung des Durchmessers des Zahnrads und/oder eine verkleinernde Übersetzung im Antriebsstrang zwischen dem exzentrischen Element und dem Mähwerksbalken an die geltenden Anforderungen bezüglich der Schnittfrequenz des Mähwerksbalkens anzupassen. Im zweiten Fall wird die Drehzahl des Zahnrads durch das Planetengetriebe reduziert, um die besagten Anforderungen zu erfüllen.

Das Planetengetriebe kann ein direkt mit dem Zahnrad verbundenes Ringrad, ein mit dem Gehäuse drehfest verbundenes Sonnenrad und einen Planetenräder tragenden Planetenträger umfassen, der mit dem exzentrischen Element verbunden ist.

Das Gehäuse kann einen Boden, einen die Zahnräder umschließenden Rand und einen Deckel mit einer kreisförmigen Öffnung umfassen. Ein mit jedem Zahnrad verbundener Ring kann sich durch die Öffnung erstrecken und eine Dichtung zwischen dem Rand der Öffnung und dem Ring angeordnet sein. Durch das Gehäuse, den Ring und die Dichtung wird demnach das Innere des Gehäuses nach außen abgedichtet.

Bei einer möglichen Ausführungsform umfasst der Zahnradmotor einen sogenannten lnnenzahnrad- oder Sichelmotor. Eine derartige Antriebsanordnung kann einen einzigen Mähwerksbalken antreiben. Bei einer anderen Ausführungsform umfasst der Zahnradmotor jedoch ein weiteres, innerhalb des Gehäuses angeordnetes Zahnrad, das mit dem ersten Zahnrad kämmt und durch das hydraulische Medium um eine dritte Achse in Drehung versetzbar ist, während ein weiterer, mit dem Zahnradmotor in Antriebsverbindung stehender Exzentertrieb vorgesehen ist, der ein weiteres, durch das weitere Zahnrad um eine zur dritten Achse parallele, vierte Achse rotativ antreibbares, exzentrisches Element und ein damit gekoppeltes Abtriebselement umfasst, das mit einem weiteren Mähwerksbalken trieblich koppelbar ist. Der hydraulische Zahnradmotor ist demnach als so genannter Außenzahnradmotor ausgeführt, dessen Zahnräder in der Mitte des Zahnradmotors (mehr oder weniger fluiddicht) kämmen und durch die hydraulische Strömung an den Außenseiten angetrieben werden. Hierbei können das exzentrische Element und das weitere exzentrische Element um 180° versetzt angeordnet sein, um die beiden Mähwerksbalken gegenphasig anzutreiben. Die oben erwähnten Details zum Antriebsstrang und Gehäuse sind auch für das weitere Zahnrad und weitere exzentrische Element anwendbar, sodass die Antriebsanordnung zu ihrer Mittellängsachse symmetrisch ausgeführt sein kann. Die beschriebene Antriebsanordnung mit den gegenphasig angetriebenen Abtriebselementen kann in der Mitte eines Schneidwerks oder ggf. gegenüber der Mitte seitlich versetzt angebracht werden. Es ist auch denkbar, den Mähwerksbalken in vier oder sechs oder mehr Teile zu trennen und jeweils zwei Teile durch eine beschriebene Antriebsanordnung, die in der Nähe der Trennstelle zwischen benachbarten Teilen angeordnet ist, anzutreiben.

Die Antriebsanordnung ist an einem Schneidwerk anwendbar, das mit einem in einer Vorwärtsrichtung über ein Feld bewegbaren Rahmen, an dessen Vorderseite ein Mähwerksbalken in seitlicher Richtung verschiebbar gelagert und der mit der Antriebsanordnung antreibbar ist. An der Vorderseite sind insbesondere zwei Mähwerksbalken seitlich versetzt zueinander angeordnet, von denen einer durch das exzentrische Element und der andere durch das weitere exzentrische Element antreibbar sind. Es wäre auch denkbar, die Antriebsanordnung an vertikalen Seitenmessern zur Ernte von Raps zu verwenden, sei es an einem Rapsvorsatzschneidwerk oder an abnehmbaren Seitenmessern eines längenverstellbaren Schneidwerks. Wie oben erwähnt, kann die Antriebsanordnung auch hier einen oder zwei Mähwerksbalken und letztere insbesondere gegenphasig antreiben.

Die vorliegende Antriebsanordnung eignet sich besonders für Schneidwerke mit längenverstellbaren Schneidtischen, bei denen ein vorderer Schneidwerksteil gegenüber einem rückwärtigen Schneidwerksteil verstellbar angeordnet ist. Bei derartigen Schneidwerken werden die Antriebsanordnung und der Mähwerksbalken am vorderen Schneidwerksteil abgestützt. Eine flexible Leitung versorgt den Zahnradmotor mit unter Druck stehenden Hydraulikfluid. Die Antriebsanordnung kann jedoch auch an beliebigen anderen Arten von Schneidwerken verwendet werden, z.B. mit nicht längenverstellbarem Schneidtisch oder mit Förderbändern anstelle von Schnecken zur Erntegutabförderung. Der Mähwerksbalken kann starr oder flexibel (bodenkopierend) sein. Das Schneidwerk kann auch lediglich zum Abschneiden und ggf. Schwaden von Erntegut dienen und beispielsweise an Schwadern bzw. Mähfahrzeugen verwendet werden.

Das Schneidwerk kann an beliebigen selbstfahrenden Erntemaschinen, wie Mähdreschern oder Feldhäckslern oder Mähfahrzeugen verwendet werden.

### Ausführungsbeispiele

In den Zeichnungen ist sind zwei nachfolgend näher beschriebenes Ausführungsbeispiele der Erfindung dargestellt. Es zeigt:
- Fig. 1: eine Draufsicht auf einem Mähdrescher mit einem daran befestigten Schneidwerk,
- Fig. 2: eine perspektivische Ansicht der mittleren Abschnitte der Mähwerkbalken des Schneidwerks der Figur 1 mit einer Antriebsanordnung zu ihrem sich hin- und her bewegenden Antrieb,
- Fig. 3: eine Explosionsansicht der Antriebsanordnung der Figur 2,
- Fig. 4: einen Schnitt durch die Antriebsanordnung der Figur 2 entlang der Linie 4-4 der Figur 2, und
- Fig. 5: eine Explosionsansicht einer zweiten Ausführungsform einer Antriebsanordnung.

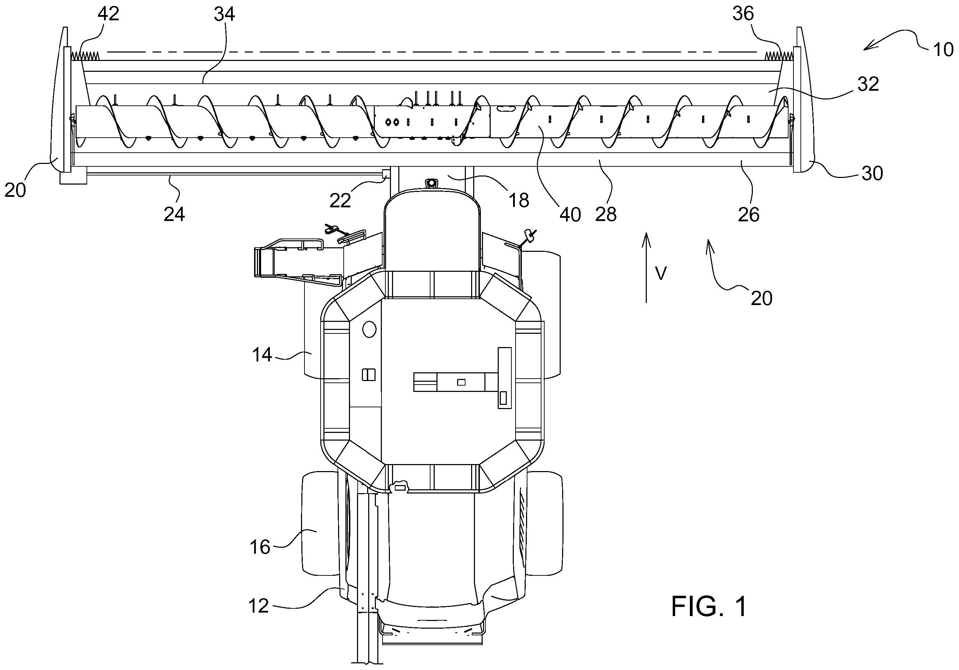

Die Figur 1 zeigt eine selbstfahrende Erntemaschine 10 in Form eines Mähdreschers in einer Draufsicht. Die Erntemaschine 10 umfasst sich einen auf antreibbaren, vorderen Rädern 14 und lenkbaren, hinteren Rädern 16 abstützenden Körper 12, der beim Erntebetrieb in einer Vorwärtsrichtung V über ein Feld bewegt wird, die sich in der Figur 1 nach links erstreckt. An seinem vorderen Ende trägt der Körper 12 einen Schrägförderer 18, an dessen vorderem Ende wiederum ein Schneidwerk 20 abnehmbar angebracht ist. Der Schrägförderer 18 weist eine angetriebene Zapfwelle 22 auf, an welcher eine Eingangswelle 24 zum Antrieb angetriebener Komponenten des Schneidwerks 10 abnehmbar angeschlossen ist. Im Erntebetrieb schneidet das Schneidwerk 20 Erntegut von einem Feld ab, nimmt es auf und führt es dem Schrägförderer 18 zu, der es in das Innere des Körpers 12 fördert, wo es gedroschen, getrennt und gereinigt wird. Schließlich wird das saubere Korn in einem Korntank abgelegt, aus dem es auf ein Transportfahrzeug überladen werden kann.

Das Schneidwerk 20 ist ausziehbar und umfasst einen rückwärtigen Teil 26 mit Seitenwänden 30 und einem sich quer erstreckenden Rahmen 28, der am Schrägförderer 18 angebracht ist, und einen vorderen Teil 32 mit einer Bodenplatte 34 und zwei Mähwerksbalken 36 und 42. Der vordere Teil 32 mit der Bodenplatte 34 und den Mähwerksbalken 36, 42 kann in der Vorwärtsrichtung V durch nicht gezeigte, hydraulische Aktoren gegenüber dem rückwärtigen Teil 26 nach hinten und vorn verschoben werden. Der rückwärtige Teil 26 umfasst weiterhin eine Querförderschnecke 40 und eine nicht gezeigte Haspel. Da Verstellmechanismen des Schneidwerks an sich bekannt sind (vgl. DE 10 2013 208 957 A1, US 7 082 742 B2 und US 7 730 702 B2) wird hier von einer näheren Diskussion abgesehen.

Der Antrieb der Querförderschnecke 40 und ggf. der Haspel erfolgt über die sich an der Rückseite des Schneidwerks 20 quer erstreckende Eingangswelle 24, die sich von der Zapfwelle 22 nach außen bis zur linken Seitenwand 20 erstreckt.

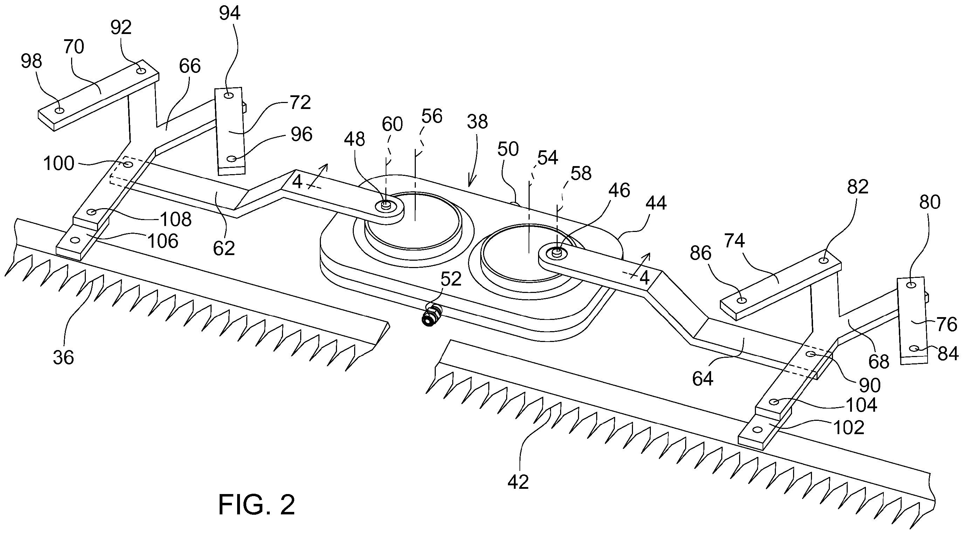

Die Figur 2 zeigt detailliert, wie die Mähwerksbalken 36, 42 angetrieben werden. Die Antriebsanordnung umfasst einen Antrieb 38 mit einem Gehäuse 44 und daran abgestützten, exzentrischen Elementen 46, 48, die jeweils über ein Abtriebselement in Form von Koppelstangen 62, 64 mit einem sie mit den Mähwerksbalken 36, 42 antriebsmäßig verbindenden Antriebsstrang verbunden sind. Die exzentrischen Elemente 46, 48 werden, wie weiter unten im Detail beschrieben, hydraulisch angetrieben, wozu das Gehäuse 44 einen Einlass 50 und einen Auslass 52 aufweist und rotieren jeweils gegensinnig um orthogonal zur Bodenplatte 34 orientierte Achsen 54, 56.

Eine erste, gerade Koppelstange 64 ist um eine parallel zur Achse 54 verlaufende Achse 58 drehbar mit dem exzentrischen Element 46 und um eine parallel zur Achse 54 verlaufende Achse 90 schwenkbar (und in Vorwärtsrichtung V etwa mittig) mit einem ersten Ausgangselement 68 gekoppelt, das seinerseits um eine parallel zur Achse 54 verlaufende Achse 104 schwenkbar oder starr, direkt oder über dazwischen angeordnete Verbindungselemente 102, mit dem linken Mähwerksbalken 42 gekoppelt ist. Die Koppelstange 64 erstreckt sich quer zur Vorwärtsrichtung V nach links. Ein erster Hebel 74 ist um eine parallel zur Achse 54 verlaufende Achse 82 schwenkbar mit einem rückwärtigen Ende des Y-förmigen Ausgangselements 68 verbunden und anderen Endes um eine parallel zur Achse 54 verlaufende Achse 86 gegenüber der Bodenplatte 34 schwenkbar gelagert. Der erste Hebel 74 erstreckt sich von der Achse 82 nach vorn und rechts. Ein zweiter Hebel 76 ist um eine parallel zur Achse 54 verlaufende Achse 80 schwenkbar mit dem anderen rückwärtigen Ende des Ausgangselements 68 verbunden und anderen Endes um eine parallel zur Achse 54 verlaufende Achse 84 gegenüber der Bodenplatte 34 schwenkbar gelagert. Der zweite Hebel 76 erstreckt sich von der Achse 80 nach vorn und links. Beide Hebel 74, 76 sind gleich lang und um die Längsachse des Ausgangselements 68 zueinander symmetrisch angeordnet.

Eine zweite, winkelförmige Koppelstange 62 ist um eine parallel zur Achse 56 verlaufende Achse 60 schwenkbar mit dem exzentrischen Element 48 und um eine parallel zur Achse 54 verlaufende Achse 100, die sich in Vorwärtsrichtung V auf gleicher Höhe mit der Achse 90 (und in Vorwärtsrichtung V etwa mittig am Ausgangselement 66) befindet, schwenkbar mit einem zweiten Ausgangselement 66 gekoppelt, das seinerseits um eine parallel zur Achse 56 verlaufende Achse 108 schwenkbar oder starr, direkt oder indirekt über dazwischen angeordnete Verbindungselemente 106, mit dem rechten Mähwerksbalken 36 gekoppelt ist. Ein dritter Hebel 70 ist um eine parallel zur Achse 56 verlaufende Achse 92 schwenkbar mit einem rückwärtigen Ende des Y-förmigen Ausgangselements 66 verbunden und anderen Endes um eine parallel zur Achse 56 verlaufende Achse 98 gegenüber der Bodenplatte 34 schwenkbar gelagert. Ein vierter Hebel 72 ist um eine parallel zur Achse 56 verlaufende Achse 94 schwenkbar mit dem anderen rückwärtigen Ende des Ausgangselements 66 verbunden und anderen Endes um eine parallel zur Achse 56 verlaufende Achse 96 gegenüber der Bodenplatte 34 schwenkbar gelagert.

Die Achsen 84, 86, 96 und 98 und das Gehäuse 44 können an der Bodenplatte 34 oder an einem beliebigen anderen Halterungselement befestigt sein, das seinerseits am vorderen Teil 32 befestigt ist. Die Achsen 90, 82, 80, 94, 92 und 100 verbinden nur jeweils zwei bewegliche Bauteile miteinander und sind nicht direkt an der Bodenplatte 34 oder dem erwähnten, die Achsen 84, 86, 96 und 98 halternden Halterungselement befestigt. Die Ausgangselemente 66, 68 können dreieckig oder, wie in der Figur 2 gezeigt, Y-förmig sein. Der dritte Hebel 70 erstreckt sich von der Achse 92 nach vorn und rechts. Der vierte Hebel 72 erstreckt sich von der Achse 94 nach vorn und links. Beide Hebel 70, 72 sind gleich lang und um die Längsachse des Ausgangselements 66 zueinander symmetrisch angeordnet. Die Antriebsanordnungen und der Antrieb 38 befinden sich unterhalb der Bodenplatte 34 und können nach unten durch eine Abdeckung geschützt werden. Die Messerbalken 36 und 42 sind im Abstand von den Ausgangselementen 66, 68 seitlich verschiebbar am vorderen Teil 42 gelagert, wozu an sich bekannte Linearlagerungen dienen können oder weitere Anordnungen nach Figur 2, die jedoch nicht aktiv angetrieben sind.

Demnach übertragen die Koppelstangen 62, 64 und die Ausgangselemente 66. 68 die exzentrische Rotationsbewegung der exzentrischen Elemente 46, 48 in zumindest annähernd lineare Bewegungen der Mähwerksbalken 36, 42, wozu im Einzelnen auf die Offenbarung der DE 10 2016 212 646 A1 verwiesen wird. Der in der Figur 2 dargestellte Antriebsstrang stellt jedoch lediglich ein bevorzugtes Ausführungsbeispiel dar und kann durch einen beliebigen anderen Antriebsstrang ersetzt werden, z.B. durch direkt an den Verbindungselementen angelenkte Koppelstangen 62, 64.

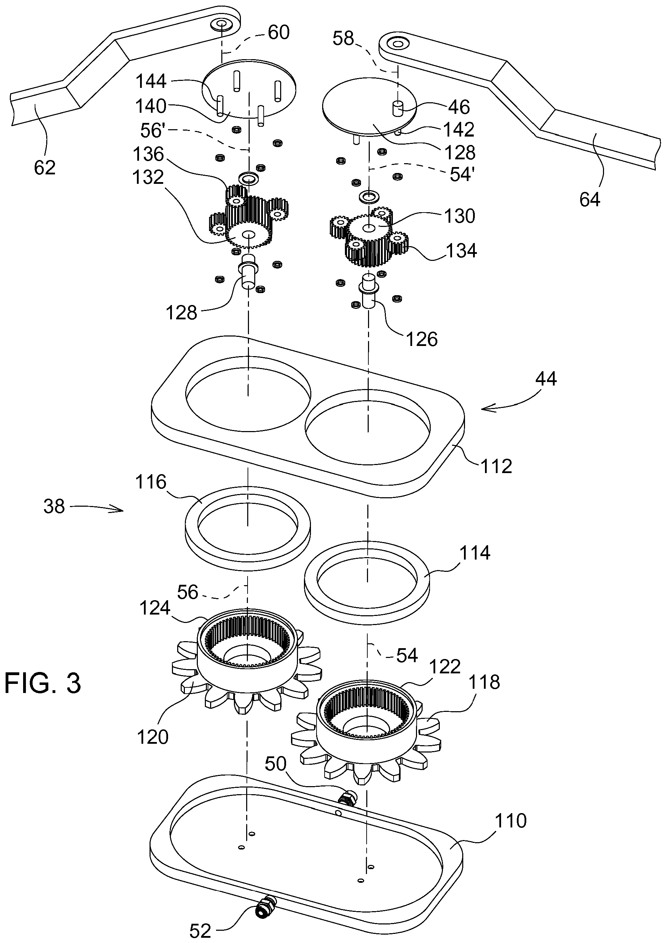

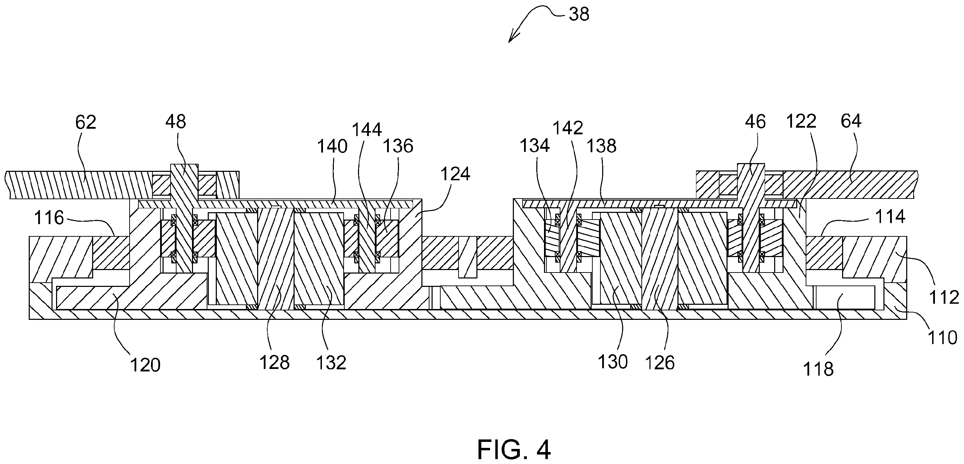

Der Aufbau des Antriebs 38 wird in den Figuren 3 und 4 in Einzelnen gezeigt. Das Gehäuse 44 umfasst einen Boden 110 mit einem äußeren, hochgezogenen Rand, innerhalb dessen vertikaler Abmessungen zwei Zahnräder 118, 120 Aufnahme finden. Die Zahnräder 118, 120 kämmen miteinander und werden durch den hydraulischen Fluss, der an den Außenseiten der Zahnräder 118, 120 vom Einlass 50 zum Auslass 52 (die auch vertauscht werden können) strömt, während durch die kämmenden Bereiche der Zahnräder 118, 120 nur wenig oder kein hydraulisches Fluid strömen kann, gegensinnig in Drehung versetzt. Mit den Zahnrädern 118, 120 sind sich nach oben erstreckende Ringe 122, 124 verbunden oder einteilig hergestellt, deren äußerer Umfang kreiszylindrisch ist und im Zusammenwirken mit radialen Dichtungen 114, 116 aus flexiblem Material und komplementären Löchern im Deckel 112 das Gehäuse 44 und die darin enthaltenen Zahnräder 118, 120 nach außen abdichtet.

Eine nicht gezeigte, flexible Leitung versorgt die Zahnräder 118, 120 des Zahnradmotors vom Mähdrescher 10 her über eine trennbare Kupplung und über den rückwärtigen Schneidwerksteil 26 mit unter Druck stehenden Hydraulikfluid. Man könnte jedoch anstelle dessen zur Versorgung des Zahnradmotors eine Pumpe am vorderen oder rückwärtigen Schneidwerksteil 26, 32 bereitstellen, die über die Eingangswelle 24 angetrieben wird.

Die Ringe 122, 124 sind innen verzahnt und dienen als Ringrad für Planetengetriebe, die jeweils ein Sonnenrad 130, 132 und Planetenräder 134 umfassen. Die Sonnenräder 130, 132 sind jeweils durch Achsen 126, 128 drehfest mit dem Boden 110 verbunden. Die mit den Sonnenrädern 130, 132 und dem Ringrad der Ringe 122, 124 kämmenden Planetenräder 134, 136 sind durch Haltestifte 142 drehbar an einem als obere Abdeckung ausgeführten Planetenradträger138, 140 gelagert. An der Oberseite des Planetenradträgers 138, 140 ist jeweils ein exzentrisches Element 46, 48 befestigt.

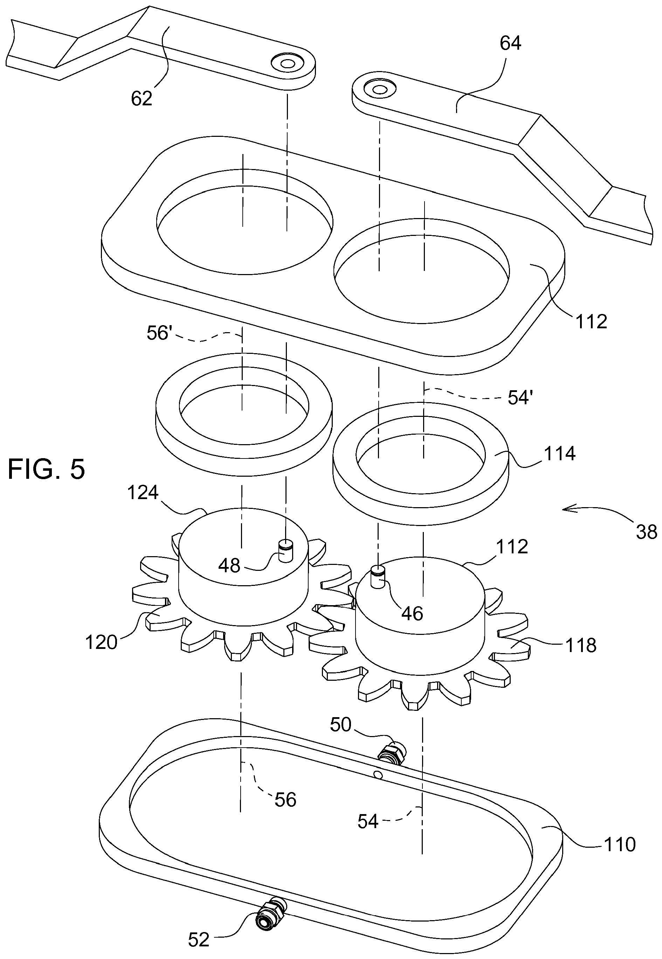

Bei der in der Figur 5 gezeigten, zweiten Ausführungsform entfallen die Planetengetriebe und die exzentrischen Elemente 46, 48 sind direkt an den Zahnrädern 118 oder den Ringen 122, 124 oder einen darauf befestigten Deckel angebracht.

Nach alledem ist erkennbar, dass durch die Verwendung eines hydraulischen Zahnradmotors mit den Zahnrädern 118, 120, die sich um eine erste bzw. dritte Achse 54, 56 drehen und des Exzentertriebs mit dem sich um dieselbe zweite bzw. vierte Achse 54', 56' drehenden, exzentrischen Element (Planetenradträger 138, 140 in Figur 3 und 4 bzw. Zahnrad 118, 120 oder Ring 122, 124 bzw. dessen Deckel in Figur 5) ein sehr flach bauender Aufbau des Antriebs 38 erreichbar ist.

## Patentansprüche

1. Schneidwerk (20) mit einem in einer Vorwärtsrichtung über ein Feld bewegbaren Rahmen (26), an dessen Vorderseite ein Mähwerksbalken (36, 42) in seitlicher Richtung verschiebbar gelagert ist, wobei der Mähwerksbalken (36, 42) mittels einer Antriebsanordnung in einer sich hin- und her bewegenden Weise antreibbar ist und die Antriebsanordnung folgendes umfasst:
einen hydraulischen Zahnradmotor mit einem Gehäuse (44) und zwei im Gehäuse (44) angeordneten Zahnrädern (118, 120), die miteinander kämmen und durch einen hydraulischen Fluss, der an den Außenseiten der Zahnräder (118, 120) von einem Einlass (50) zum Auslass (52) des Gehäuses (44) strömt, während durch die kämmenden Bereiche der Zahnräder (118, 120) nur wenig oder kein hydraulisches Fluid strömen kann, gegensinnig in Drehung versetzbar sind, sodass die Zahnräder (118, 120) durch ein hydraulisches Medium um eine erste Achse (54) in Drehung versetzbar sind, und
einen mit dem Zahnradmotor in Antriebsverbindung stehenden Exzentertrieb, der ein durch eines der Zahnräder (118) um eine zur ersten Achse (54) parallele, zweite Achse (54') rotativ antreibbares, exzentrisches Element (46) und ein mit dem exzentrischen Element (46) gekoppeltes Abtriebselement umfasst, das mit dem Mähwerksbalken (42) trieblich gekoppelt ist.

2. Schneidwerk (20) nach Anspruch 1, wobei die zweite Achse (54') zur ersten Achse (54) koaxial ist.

3. Schneidwerk (20) nach Anspruch 1 oder 2, wobei das exzentrische Element (46) direkt oder durch ein Planetengetriebe mit dem Zahnrad (118) gekoppelt ist.

4. Schneidwerk (20) nach Anspruch 3, wobei das Planetengetriebe ein direkt mit dem Zahnrad (118) verbundenes Ringrad, ein mit dem Gehäuse (44) drehfest verbundenes Sonnenrad (130) und einen Planetenräder (134) tragenden Planetenträger (138) umfasst, der mit dem exzentrischen Element (46) verbunden ist.

5. Schneidwerk (20) nach einem der vorhergehenden Ansprüche, wobei das Gehäuse (44) einen Boden (110), einen die Zahnräder (118, 120) umschließenden Rand und einen Deckel (112) mit einer kreisförmigen Öffnung umfasst, ein mit jedem Zahnrad (118, 120) verbundener Ring (122, 124) sich durch die Öffnung erstreckt und eine Dichtung (114) zwischen dem Rand der Öffnung und dem Ring (122) angeordnet ist.

6. Schneidwerk (20) nach einem der vorhergehenden Ansprüche, wobei ein weiterer, mit dem Zahnradmotor in Antriebsverbindung stehender Exzentertrieb vorgesehen ist, der ein weiteres, durch das weitere Zahnrad (120) um eine zur dritten Achse (56) parallele, vierte Achse (56') rotativ antreibbares, exzentrisches Element (48) und ein damit gekoppeltes Abtriebselement umfasst, das mit einem weiteren Mähwerksbalken (36) trieblich koppelbar ist.

7. Schneidwerk (20) nach Anspruch 6, wobei das exzentrische Element (46) und das weitere exzentrische Element (48) um 180° versetzt angeordnet sind.

8. Schneidwerk (20) nach Anspruch 6 oder 7, wobei an der Vorderseite zwei Mähwerksbalken (36, 42) seitlich versetzt zueinander angeordnet sind, von denen einer durch das exzentrische Element (46) und der andere durch das weitere exzentrische Element (48) antreibbar sind.

9. Mähdrescher (10) mit einem Schneidwerk (20) nach einem der Ansprüche 1 bis 8.

## Claims

1. Cutting system (20) with a frame (26) which is movable over a field in a forwards direction and on the front side of which a cutter bar (36, 42) is mounted so as to be displaceable in the lateral direction, wherein the cutter bar (36, 42) can be driven in a manner moving to and fro by means of a drive arrangement, and the drive arrangement comprises the following:
a hydraulic gear motor with a housing (44) and two gear wheels (118, 120) which are arranged in the housing (44), meshed together and can be set into rotation in opposite directions by means of a hydraulic flow which flows on the outer sides of the gear wheels (118, 120) from an inlet (50) to the outlet (52) of the housing (44) while only little or no hydraulic fluid can flow through the meshing regions of the gear wheels (118, 120), and therefore the gear wheels (118, 120) can be set into rotation about a first axis (54) by means of a hydraulic medium, and
an eccentric drive which is connected in terms of drive to the gear motor and comprises an eccentric element (46), which can be driven in a rotational manner by one of the gear wheels (118) about a second axis (54') which is parallel to the first axis (54), and an output element which is coupled to the eccentric element (46) and is coupled in terms of drive to the cutter bar (42).

2. Cutting system (20) according to Claim 1, wherein the second axis (54') is coaxial with respect to the first axis (54).

3. Cutting system (20) according to Claim 1 or 2, wherein the eccentric element (46) is coupled to the gear wheel (118) directly or by a planetary gearing.

4. Cutting system (20) according to Claim 3, wherein the planetary gearing comprises a ring gear connected directly to the gear wheel (118), a sun gear (130) connected to the housing (44) for rotation therewith, and a planet carrier (138) which carries planet gears (134) and is connected to the eccentric element (46).

5. Cutting system (20) according to one of the preceding claims, wherein the housing (44) comprises a base (110), an edge surrounding the gear wheels (118, 120) and a cover (112) with a circular opening, a ring (122, 124) which is connected to each gear wheel (118, 120) extends through the opening, and a seal (114) is arranged between the edge of the opening and the ring (122).

6. Cutting system (20) according to one of the preceding claims, wherein a further eccentric drive is provided which is connected to the gear motor in terms of drive and comprises a further eccentric element (48), which can be driven in a rotational manner about a fourth axis (56') which is parallel to the third axis (56) by means of the further gear wheel (120), and an output element which is coupled to said eccentric element and can be coupled in terms of drive to a further cutter bar (36).

7. Cutting system (20) according to Claim 6, wherein the eccentric element (46) and the further eccentric element (48) are arranged offset by 180°.

8. Cutting system (20) according to Claim 6 or 7, wherein two cutter bars (36, 42) are arranged laterally offset with respect to each other on the frontside and of which one can be driven by the eccentric element (46) and the other by the further eccentric element (48).

9. Combine harvester (10) with a cutting system (20) according to one of Claims 1 to 8.

## Revendications

1. Mécanisme de coupe (20) comprenant un cadre (26) déplaçable dans un champ dans une direction de marche avant, sur le côté avant duquel est supportée, de manière déplaçable dans la direction latérale, une barre de faucheuse (36, 42), la barre de faucheuse (36, 42) pouvant être entraînée suivant un mouvement de va-et-vient au moyen d'un agencement d'entraînement et l'agencement d'entraînement comprenant :
un moteur hydraulique à roues dentées comprenant un boîtier (44) et deux roues dentées (118, 120) disposées dans le boîtier (44), lesquelles s'engrènent l'une avec l'autre et peuvent être mises en rotation en sens inverse par un flux hydraulique qui s'écoule au niveau des côtés extérieurs des roues dentées (118, 120) depuis une entrée (50) jusqu'à une sortie (52) du boîtier (44) tandis que seulement un fluide hydraulique faible ou nul peut s'écouler à travers les régions des roues dentées (118, 120) en prise d'engrènement, de telle sorte que les roues dentées (118, 120) puissent être mises en rotation autour d'un premier axe (54) par un milieu hydraulique et
un entraînement excentrique en liaison d'entraînement avec le moteur à roues dentées, lequel comprend un élément excentrique (46) pouvant être entraîné en rotation par l'une des roues dentées (118) autour d'un deuxième axe (54') parallèle au premier axe (54) et un élément de prise de force accouplé à l'élément excentrique (46), qui est accouplé par entraînement à la barre de faucheuse (42).

2. Mécanisme de coupe (20) selon la revendication 1, dans lequel le deuxième axe (54') est coaxial au premier axe (54).

3. Mécanisme de coupe (20) selon la revendication 1 ou 2, dans lequel l'élément excentrique (46) est accouplé à la roue dentée (118) directement ou par le biais d'un engrenage planétaire.

4. Mécanisme de coupe (20) selon la revendication 3, dans lequel l'engrenage planétaire comprend une couronne connectée directement à la roue dentée (118), une roue solaire (130) connectée de manière solidaire en rotation au boîtier (44) et un porte-satellites (138) portant un satellite (134), lequel est connecté à l'élément excentrique (46).

5. Mécanisme de coupe (20) selon l'une quelconque des revendications précédentes, dans lequel le boîtier (44) comprend un fond (110), un bord entourant les roues dentées (118, 120) et un couvercle (112) avec une ouverture circulaire, une bague (122, 124) connectée à chaque roue dentée (118, 120) s'étend à travers l'ouverture, et un joint d'étanchéité (114) est disposé entre le bord de l'ouverture et la bague (122).

6. Mécanisme de coupe (20) selon l'une quelconque des revendications précédentes, dans lequel il est prévu un entraînement excentrique supplémentaire en liaison d'entraînement avec le moteur à roues dentées, lequel comprend un élément excentrique supplémentaire (48) pouvant être entraîné en rotation par la roue dentée supplémentaire (120) autour d'un quatrième axe (56') parallèle au troisième axe (56) et un élément de prise de force accouplé à celui-ci, qui peut être accouplé par entraînement à une barre de faucheuse supplémentaire (36).

7. Mécanisme de coupe (20) selon la revendication 6, dans lequel l'élément excentrique (46) et l'élément excentrique supplémentaire (48) sont disposés de manière décalée de 180°.

8. Mécanisme de coupe (20) selon la revendication 6 ou 7, dans lequel deux barres de fauche (36, 42) sont disposées sur le côté avant, de manière décalée latéralement l'une par rapport à l'autre, dont l'une peut être entraînée par l'élément excentrique (46) et l'autre peut être entraînée par l'élément excentrique supplémentaire (48).

9. Moissonneuse-batteuse (10) comprenant un mécanisme de coupe (20) selon l'une quelconque des revendications 1 à 8.
